# EUROPEAN PATENT SPECIFICATION

(11) **EP 3 407 444 B1**
(45) Date of publication and mention of the grant of the patent: **10.06.2020**
(21) Application number: 17382295.8
(22) Date of filing: 23.05.2017
(51) Int. Cl.: H02G 3/18, A47B 21/06

(54) **MECHANISM FOR OPENING AND CLOSING THE COVER OF A HOUSING**
MECHANISMUS ZUM ÖFFNEN UND SCHLIESSEN DES DECKELS EINES GEHÄUSES
MÉCANISME D'OUVERTURE ET DE FERMETURE DU COUVERCLE D'UN LOGEMENT

(43) Date of publication of application: 28.11.2018
(73) Proprietor: Simon, S.A.U., 08013 Barcelona (ES)
(72) Inventor: PÉREZ PÉREZ, Miguel, 28024 Madrid (ES); TOMÁS SANCHEZ, Oriol, 08013 Barcelona (ES); RIQUE REBULL, Adrià, Barcelona 08013 (ES)
(74) Representative: Balder IP Law, S.L.

(56) References cited:
- DE-A1- 10 151 449
- DE-U1-202016 003 253
- ES-A1- 2 474 917

## Description

### TECHNICAL FIELD

The present invention relates to a mechanism for opening and closing the cover of a housing specifically a connection housing embeddable in a table, wall, floor or similar, of the type where the cover is adapted to be lifted by two opposite sides to allow access to the inside by either one or the other side. The present invention seeks to provide a mechanism that is simple, which takes the minimum room of the housing, that allows a smooth operation and that is easy to manufacture.

### STATE OF THE ART

Known in the art are the mechanisms for opening and closing the cover of a connections housing, the housing being embeddable in a table and the cover being adapted to be lifted by two opposite sides to allow access to the connections by either one or the other side, the mechanism comprising the cover, two end bearing surfaces of two opposite ends being defined in the cover for leaning on two edges adjacent the housing.

An example of such mechanism has been disclosed in ES 2 474 917 A1 of the same applicant.

A mechanism disclosed therein is based either on two protrusions in each of the sides that lean on complementary grooves. The drawback of this solution is that it is not optimal for correctly guiding the cover when opening or closing it. It is easy that the cover is disassembled when opening or closing it. An objective of the present invention is to guarantee an efficient guiding of the cover, such that the user does not have to worry when opening it.

Another mechanism disclosed in ES 2 474 917 A1 is based on pivoting arms, such that one end of the pivoting arm is fixed to the housing, while the other end bears a movable axis, thus allowing the cover to be opened from both sides. Other mechanisms are disclosed in DE 20 2016 003253 U1 and DE 101 51 449 A1.

Other known solutions are based on gruesome systems with telescopic arms or guided rollers, which can guide the cover according to the desired movements, but which imply complex parts, are not costly effective and that do not provide with a good aesthetics to the system.

One major aim of the present invention is providing a cover that is efficiently guided but that can also fully removed for accessing the housing, for example for cleaning it or change the connections.

### DESCRIPTION OF THE INVENTION

For overcoming the mentioned drawbacks the present invention proposes a mechanism for opening and closing the cover of a housing, according to claim 1.

The combination of the guiding grooves with the contact of the cover with the edges adjacent the housing allow for guiding correctly the cover for opening it by either side.

Another advantage is that the guiding assemblies can have more features, like the vertical grooves, the stabilizing means, while avoiding occupying room in the housing.

Another advantage of the groove protrusion combination as claimed is that there is no need of a very precise tolerance control, since the groove depth direction and the protrusion direction can guarantee a convenient interaction without the need of controlling with high precision the position of the guiding extensions. Otherwise said, some state of the art solutions imply that the parts joined to the cover have to engage the fixed part in a very accurate position, which implies controlling with high precision the tolerances.

In some embodiments, the first and second grooves are extended at their lower end by a vertical groove which extends upwards and has its upper end opened such that the cover can be totally uncoupled from the guiding assemblies when the cover is moved upwards with a translation movement.

This feature allows the cover to be lifted for entirely retiring it and comfortably accessing the inside of the housing for cleaning it, or arranging connections.

In some embodiments, the first and the second groove are closed in their upper end.

In this way, when operating the cover for opening it from a side, the cover will remain retained. If the cover has to be removed, then it has to be lifted parallel to the surface of the table, wall, floor or similar where the housing is embedded such that the protrusions will take the way of the vertical grooves instead of the arched ones, which are closed.

In some embodiments, the first groove is placed in the vicinity of the first axis and the second groove is placed in the vicinity of the second axis, the first groove being extended at his lower end by a vertical which extends upwards, the second groove being extended at his lower end by a vertical which extends upwards, the vertical grooves being distinct grooves.

In some embodiments, the first groove and the second groove are joined in their lower ends, such that they are extended therefrom by a common vertical groove.

In these embodiments, the protrusions engaging the guiding grooves are far away the rotation axis, such that the protrusions can produce high moments with respect to the axis. Therefore, by arranging conveniently the forces between the protrusions and the grooves, it will be possible to smooth the movement of the cover.

In some embodiments, each assembly has two grooves centred in the first axis and two grooves centred in the second axis, two grooves extending through a common vertical groove, the other two grooves extending through distinct vertical grooves.

Therefore, in these embodiments, the guiding is more effective, we can ensure that the cover is correctly retained by two sides and the central grooves can be used for providing a good damping of the cover's movement.

In some embodiments, at least one of the first protrusions comprises a wheel. Preferably each of the first protrusions of the guiding extensions comprises a wheel. The wheel has proved to be especially effective for damping the movement of the cover. The dampening can be controlled by selecting the material of the wheel, for example rubber, or by providing some viscosity in the axis of the wheel.

In some embodiments, the mechanism comprises an embeddable structure which defines the housing, the guiding assemblies being fixed to the embeddable structure, the embeddable structure being provided with the bearing surfaces.

In some embodiments, the mechanism comprises an embeddable structure which defines the housing, the guiding assemblies being part of the embeddable structure, forming at least part of two opposed minor walls of the housing.

Therefore, the mechanism can be fixed to a table, wall, floor or similar and in case the guiding assemblies need to be replaced, since they are the parts supporting more wear and higher efforts, they can be replaced without the need of replacing the whole structure.

In some embodiments, the embeddable structure comprises a frame.

The frame provides an improved aesthetics to the mechanism.

In some embodiments, the frame is made in two separate parts, such that a discontinuous portion is defined, the opposite ends of the cover fitting in the discontinuous portion.

Therefore, the cover and the frame can be made flush, thereby improving the aesthetics.

In some embodiments, two accessing apertures are defined between the frame and the cover, such that cables can access the connections within the housing when the cover is in a lowest position.

The mechanism can comprise further covers for these apertures, for examples spring biased, such that they ensure that the housing is closed when no cables goes through the apertures. As known per se, these additional covers can have a brush, thereby allowing the cables to pass therethrough, but preventing at the same time the dust from entering the housing.

In some embodiments, the embeddable structure comprises plates adjacent the guiding assemblies for the attachment thereof, the plates comprising grooves adjacent to some of the grooves of the guiding assemblies.

In some embodiments, the grooves of the plates are wider than the grooves of the guiding assemblies.

This feature allows protecting the guiding assemblies, which can be therefore made of plastic, because if the user pulls up the cover too strongly, therefore the protrusions, conveniently extended to reach the structure, will be retained by the structure therefore avoiding too much deformation of the guiding assemblies.

In some embodiments, the guiding assemblies are made of plastic material.

Finally, in some embodiments, the guiding extensions and the guiding assemblies comprise means for stabilizing the position of the cover in different positions.

These means for stabilizing can be implemented with cavities along the groove in combination with a ball-spring set arranged in the protrusion. Another possibility is to provide a ferromagnetic material at the stabilized positions.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as an example of how the invention can be carried out. The drawings comprise the following figures:
Figure 1 shows the mechanism in the closed position, where the cover rests on both sides of the structure, which is provided with two frame portions that are continuous with the edges of the cover.
Figure 2 shows an embodiment wherein the cover has been lifted by one of its sides.
Figure 3 shows an embodiment of the cover alone.
Figure 4 shows a lateral view of the mechanism in a position reached when one of the sides of the cover is lifted.
Figure 5 shows a lateral view of the mechanism in a position reached when the other side is lifted. It is a symmetrical position with respect to that shown in FIG. 4.
Figure 6 shows a lateral view of the mechanism in a position reached when the cover is lifted following a vertical translation. Here the cover is guided by the vertical grooves.
Figure 7 shows a lateral view of the mechanism in the closed position of the cover.
Figure 8 is a perspective view of an embodiment of the present invention where the guiding grooves of the guiding assemblies are placed near the rotation axis, the central part of the guiding assemblies being provided with means for stabilizing the cover in the extreme positions.

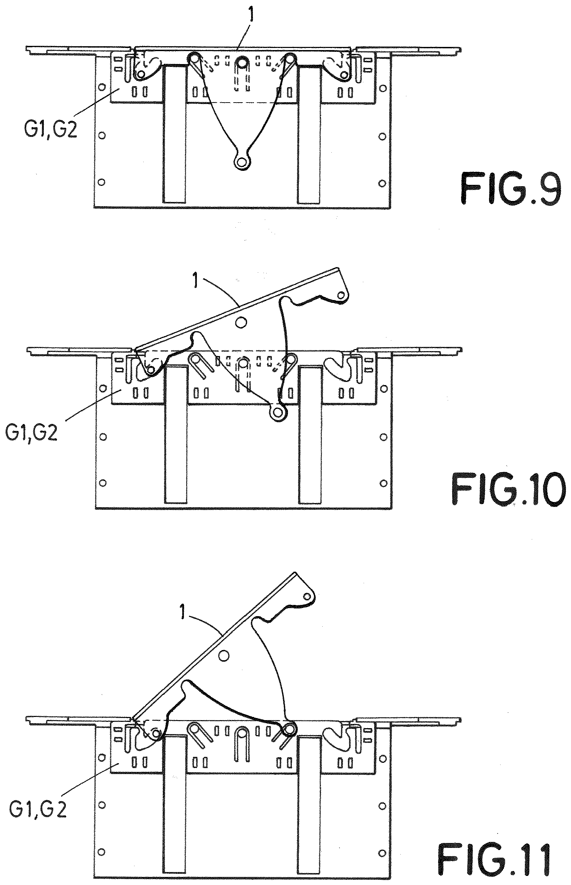

Figures 9 to 11 show three successive positions of the cover, closed, intermediate and opened.
Figure 12 is a perspective view of a guiding assembly, in this case made as a single plastic piece.

### DESCRIPTION OF A WAY OF CARRYING OUT THE INVENTION

As shown in the figures, the present invention relates to a mechanism M for opening and closing the cover 1 of a housing H.

The housing will typically houses a data and/ or power sockets. The data power socket and the inner surface of the housing can be provided with mutually engaging features.

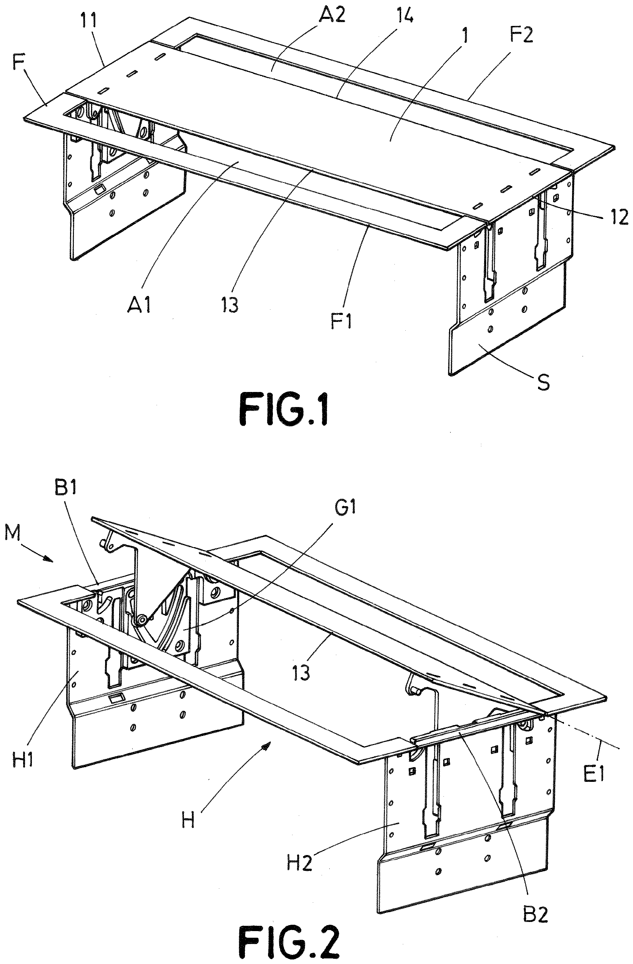

The housing H is embeddable in a table, wall, floor or similar and the cover 1 is adapted to be lifted by two opposite sides 13, 14 to allow access to the connections by either one 13 or the other side 14, so that when one of the sides 13, 14 is lifted the other side 14, 13 remains fixed so that the cover pivots on one of a first E1 or a second E2 axes defined by the other side 14, 13 respectively, as shown in Figure 2, 4 or 5.

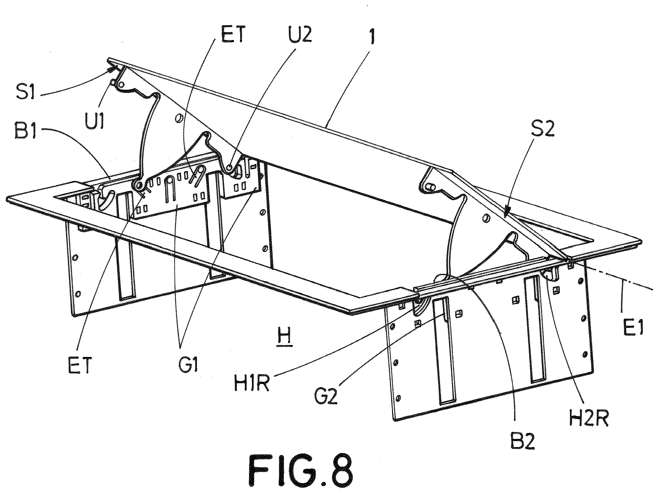

The mechanism comprises the cover 1, where two end bearing surfaces S1, S2 of two opposite ends 11, 12 are defined for leaning on two edges B1, B2 adjacent the housing H, as shown for example in figure 8. The fact that the edges B1, B2 of the housing support the ends of the edges of the cover 1, allow the edges of the cover 1, i.e. the longest edges in the figures, to act as rotation axis E1, E2. The edges B1 and B2 are placed in opposite locations with respect to the housing upper aperture and are adjacent the vertical minor walls of the housing H.

The mechanism also comprises two guiding extensions P1, P2 extending from the cover 1 arranged adjacent the bearing surfaces S1, S2 and oriented towards the housing H. In the embodiments shown, these guiding extensions are triangular.

Two guiding assemblies G1, G2 are disposed on the housing surfaces adjacent to the edges B1, B2, so that the guiding assemblies G1, G2 face the guiding extension P1, P2, when the bearing surfaces S1, S2 of the cover leans on the two edges B1, B2.

Then, each guiding assembly G1, G2 comprises at least a first groove R1, R1' and a second groove R2, R2', both having a circular arc shape, and each guiding extension P1, P2 comprises at least a first protrusion W1, W2, U1, U2 that slides within the grooves R1, R1', R2, R2', wherein:
- the center of the circle arc of the first groove R1, R1' is located on the first axis E1;
- the center of the circle arc of the second groove R2, R2' is located on the second axis E2.

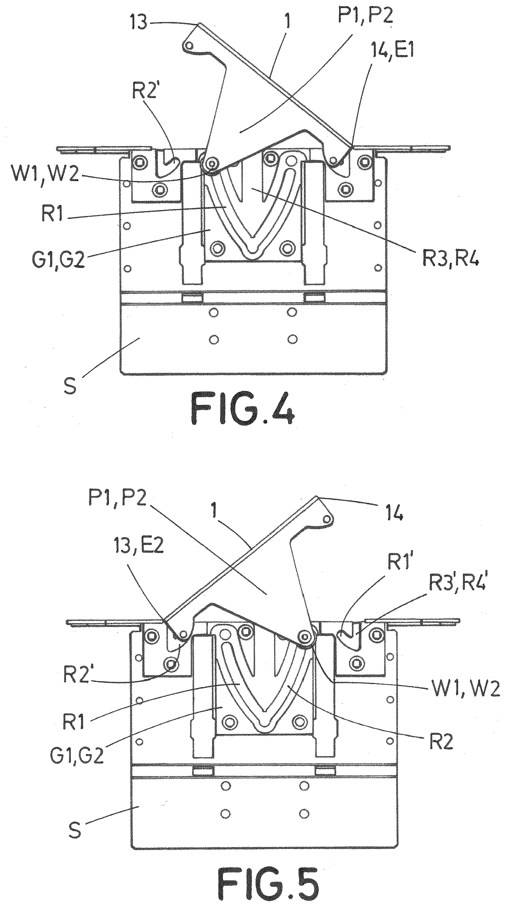

In this way it is possible to open the cover 1 by its two opposite sides, 13, 14, as shown in the sections of figures 4 and 5.

As shown in the figures, the first R1, R1' and second R2, R2' grooves are extended at their lower end by a vertical groove R3, R3', R4, R4' which extends upwards and has its upper end opened such that the cover 1 can be totally uncoupled from the guiding assemblies G1, G2 when the cover 1 is moved upwards with a translation movement.

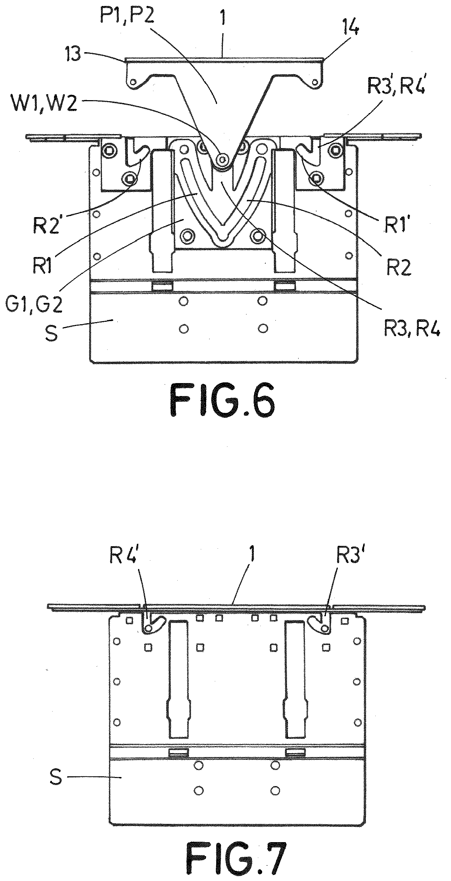

Specifically, as shown in figure 6, if the cover is lifted with a vertical translation movement, the protrusions is guided by the grooves R3, R3', R4, R4', which are opened in their upper end, and therefore the cover can be completely uncoupled form the guiding assemblies.

Preferably, the first R1, R1' and the second groove R2, R2' are closed in their upper end.

Then, since the upper end of the arched grooves are closed, if the user, starting from the closed position shown in figure 7, rises one of the cover edges 13 or 14, the protrusions enter the ached grooves instead of the vertical ones, and the cover is correctly guided to rotate on the axis E1 or E2, without the possibility for the cover of being detached.

As shown in the embodiment of figure 8, the first groove R1' is placed in the vicinity of the first axis E1 and the second groove R2' is placed in the vicinity of the second axis E2, the first groove R1' being extended at his lower end by a vertical R3' which extends upwards, the second groove R2' being extended at his lower end by a vertical R4' which extends upwards, the vertical grooves being distinct grooves.

In these cases, the grooves have a short arched stroke, while the angle subtended defines the maximum opening angle of the cover 1. In this embodiment, and as shown in figure 8, the part of the guiding extension P1, P2 which effectively guides, is close to the edges 13, 14, so the guiding extension P1, P2 comprises at the upper part on each opposite ends two protrusions U1, U2, that slide within the grooves R1, R1', R2, R2', whereas the central part of the guiding extension P1, P2, in this case the rounded triangle, comprises at its ends blocking means.

Another possibility, shown in figures 4 to 7, is that the first groove R1 and the second groove R2 are joined in their lower ends, such that they are extended therefrom by a common vertical groove R3, R4.

This embodiment is advantageous in that the protrusions W1, W2 supported at the ends of the guiding extensions P1, P2 are far away from the cover rotation axis E1, E2 and therefore can exert a high moment with low forces. This is not the case for the embodiment shown in figure 8, which in turn needs to be provided with the blocking means at the lowest end of the guiding extensions.

The high moment is needed to control the movement smoothness. If the movement is not dampened, therefore when releasing the cover from the position shown in figure 4, 5 or 6, then it will fall and make noise when impacting with the frame, which is an undesirable situation in the case of a table with people working.

The preferred embodiment is that shown in figures 4 to 7, since it combines the advantages of having two grooves for each side. As shown, each assembly has two grooves R1, R1' centred in the first axis E1 and two grooves R2, R2' centred in the second axis E2, two grooves R1, R2 extending through a common vertical groove R3, R4, the other two grooves R1', R2' extending through distinct vertical grooves R3', R4'.

In this embodiment the guiding extension P1, P2 also comprises protrusions U1, U2 located at the upper part on each opposite end which are guided by the grooves R1', R2' which extends through distinct vertical grooves R3', R4', which preferably are in the vicinity of the rotation axis E1, E2 of the cover.

This allows to perfectly guiding the cover 1 when bringing it to the positions of the sections of figure 4 and figure 5.

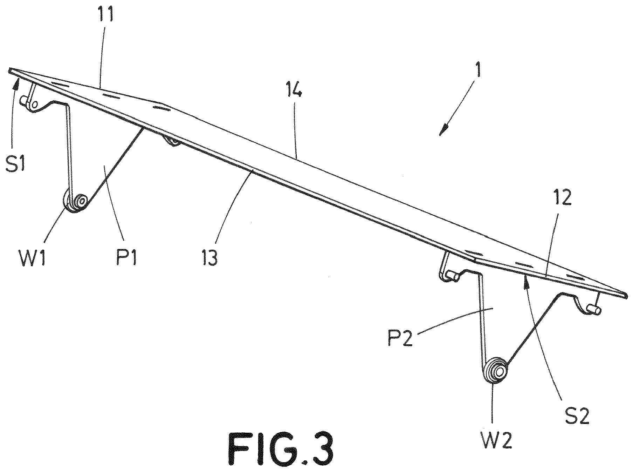

It is preferred that the protrusions W1, W2 comprise each a wheel W, which is the arrangement shown in figures 3 to 7. By setting correctly the tolerances between wheel and grooves, and combining it with the materials, it is possible to select the damping force. Another possibility is to provide some dampening in the wheel axis. That is, the damping force can be controlled by providing some energy dispersion means at the protrusion.

The protrusion W1, W2 can be a simple pin or a ball-spring, which would provide some dampening thanks to the friction with the groove. However this requires a high precision in the housing assembling, as the friction direction is the same as the direction of the gap between the guiding extensions P1, P2 and the guiding assemblies G1, G2.

Nevertheless, the inventors have checked and incorporated to the preferred embodiment a wheel, especially a plastic, elastic or rubber wheel allows for a smoother movement. Also, the use of a wheel for dampening the closing of the cover 1, allows for changing the direction of the friction forces, from parallel to the gap longitude between the guiding extensions P1, P2 and the guiding assemblies G1, G2, to a perpendicular direction, which is executed between the longitudinal surface of the pin or a ball-spring or a coating of the same, and the wheel interior thickness surface and between the wheel external thickness surface and thickness surface of the grooves R1, R1', R2, R2' of the guiding assemblies G1, G2. This provides a greater degree of freedom in the assembling tolerances of the housing, as the contact surface providing friction is greater and the tolerance that need to be controlled is in the grooves R1, R1', R2, R2' wideness and its surface thickness.

In the embodiment of figure 8, where two arched grooves R1', R2' are located in the vicinity of the rotation axis of the cover E1, E2, and both arched grooves are extended at his lower end by vertical grooves R3', R4' which extends upwards and are two distinct grooves, the protrusions U1, U2 located at the upper part on each opposite end of the guiding extension P1, P2, can be just a pin, a ball/ spring assembly, eventually in combination with a wheel, if additional dampening is considered necessary, achieving the advantages already mentioned in the previous paragraphs of changing the direction of the friction forces to allow a greater tolerance in the assembling of the housing.

In the preferred embodiment shown in figures 4 to 7, which combines the advantages of having two grooves for each side, the guiding extension P1, P2 also comprises protrusions U1, U2 located at the upper part on each opposite end, which can be just a pin, a ball/ spring assembly, eventually in combination with a wheel, if additional dampening is considered necessary, achieving the advantages already mentioned in the previous paragraphs of changing the direction of the friction forces to allow a greater tolerance in the assembling of the housing.

As shown in the figures, the housing H comprises an embeddable structure S which defines the housing H. Therefore, the guiding assemblies G1, G2 can be fixed to the embeddable structure S, the embeddable structure S being provided with the two edges of the housing B1, B2. Another possibility is that the guiding assemblies form an integral part of the embeddable structure S. In this case, as noted below, a reinforcement may be added to the upper edge of the grooves, for avoiding deformation or breaking of the guiding grooves when pulling the cover 1 too hard.

The embeddable structure S also comprises a frame F preferably composed by two separate parts F1, F2, such that a discontinuous portion is defined, and the opposite ends 11, 12 of the cover 1 fitting in the discontinuous portion as shown in figure 1. Then, two accessing apertures A1, A2 are defined between the frame F and the cover 1, such that cables can access the connections within the housing H when the cover 1 is in a lowest position.

As shown for example in figure 1, the frame is made of two frame parts F1, F2, that are flush with the upper cover surface in a closed condition. Therefore, the edges of the frame parts F1, F2 define, with respect to the two edges B1, B2 adjacent the housing (H) which are in a lower level, a step. The height of this step corresponds preferably to the thickness of the cover 1, and therefore the resulting upper surface comprising the cover and frame surface is flat. The steps defined between the levels between the frame F1, F2 surfaces and the two edges B1, B2 surface coincide with the first and second rotation axis E1, E2 of the cover, and help to stabilize the cover rotation.

In all the embodiments, the embeddable structure S comprises plates H1, H2 adjacent the guiding assemblies G1, G2 for the attachment thereof, the plates H1, H2 comprising grooves H1R, H2R adjacent to some of the grooves R1, R1', R2, R2' of the guiding assemblies. The grooves of the plates H1, H2 are wider than the grooves R1, R1', R2, R2' of the guiding assemblies G1, G2.

All the embodiments can comprise means for stabilizing the position of the cover 1 in some positions. In a preferred embodiment, such means are implemented by a cooperation between the guiding extensions P1, P2 and the guiding assemblies G1, G2. Preferably the means for stabilizing the position is a ball-spring which engages in cavities performed in the guiding assemblies G1, G2 surface or the plates of the embeddable structure.

For example, in figure 8 the stabilizing means are implemented by means of elastic tabs ET that cooperate with a protrusion at the end of the guiding extensions P1, P2 of the cover 1.

The grooves R1, R1', R2, R2' of the guiding assemblies G1, G2, may comprise a plastic reinforcement not shown in the figures, which preferably will extend from the upper edge along the groove, and more preferably will extend from the upper curved edge where the arc groove R1, R1', R2, R2' extends into the straight groove R3, R3', R4, R4'. Otherwise said, if accidentally the cover 1 is pulled up too hard, the pins or guiding protrusions will abut on this reinforcements, thus ensuring the integrity of the guiding assemblies.

Especially in the preferred embodiment shown in figures 4 to 7, that combines the advantages of having two grooves for each side, the two grooves R1', R2' extending through distinct vertical grooves R3', R4' are wider than the diameter of the guiding protrusion, so a lack is provided between the guided protrusion and the groove that allows for an easier extraction of the cover and avoids tensions in the housing structure when opening the cover.

These two grooves R1', R2' extending through distinct vertical grooves R3', R4' preferably comprises a plastic reinforcement extending from the upper curved edge where the arc groove R1', R2' extends into the straight groove R3', R4'.

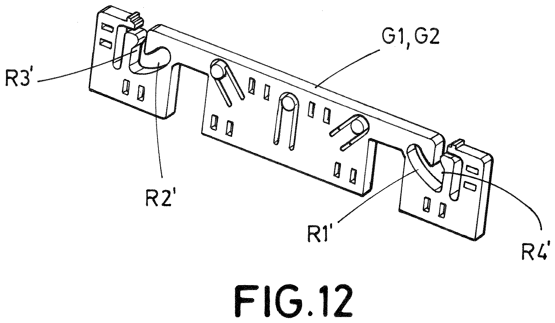

In some embodiments the guiding assemblies G1, G2 comprise a flexible appendage forming one of the walls of the straight grooves R3', R4'. Said appendage ends on its upper and free end on a bulged shape, as shown in figure 12, so when the protrusion U1, U2, pass through the bulged end the appendage result displaced increasing the wide of the groove, therefore the unfitting of the cover is more difficult, avoiding to disassemble it accidentally and also providing a clip feeling to the user when the cover is disassembled and assembled in place.

Another possibility, more robust, is to provide some cavities at the ends of the grooves, or at regular intervals, which cooperate with a ball biased with a spring towards the cavities.

The inventive concept can be applied to other covers, not necessarily to covers for connections housing. For example, it can be used for a housing embedded in a wall or for a closet. In these cases the cover would be contained in a vertical plane, like a door.

In this text, the term "comprises" and its derivations (such as "comprising", etc.) should not be understood in an excluding sense, that is, these terms should not be interpreted as excluding the possibility that what is described and defined may include further elements.

The invention is obviously not limited to the specific embodiments described herein, but also encompasses any variations that may be considered by any person skilled in the art within the general scope of the invention as defined in the claims.

## Claims

1. A mechanism (M) for opening and closing the cover (1) of a housing (H), the cover (1) being adapted to be lifted by two opposite sides (13, 14) to allow access to the inside by either one (13) or the other side (14), so that when one of the sides (13, 14) is lifted the other side (14, 13) remains fixed so that the cover pivots on one of a first (E1) or a second (E2) axes defined by the other side (14, 13) respectively, the mechanism comprising:
- the cover (1), two end bearing surfaces (S1, S2) of two opposite ends (11, 12) being defined in the cover (1) for leaning on two edges (B1, B2) adjacent the housing (H);
- two guiding extensions (P1, P2) extending from the cover (1) arranged adjacent the bearing surfaces (S1, S2) and adapted to be oriented towards the housing (H);
- two guiding assemblies (G1, G2) arrangeable in the housing surfaces that are adjacent to the edges (B1, B2), so that the guiding assemblies (G1, G2) face the guiding extensions (P1, P2) when the cover leans on the two edges (B1, B2);
**characterized in that** each guiding assembly (G1, G2) comprises at least a first groove (R1, R1') and a second groove (R2, R2'), both having a circular arc shape, and each guiding extension (P1, P2) comprises at least a first protrusion (W1, W2, U1, U2) that slides within the grooves (R1, R1', R2, R2'), wherein:
- the center of the circle arc of the first groove (R1, R1') is located on the first axis (E1);
- the center of the circle arc of the second groove (R2, R2') is located on the second axis (E2).

2. Mechanism (M) according to claim 1, wherein the first (R1, R1') and second (R2, R2') grooves are extended at their lower end by a vertical groove (R3, R3', R4, R4') which extends upwards and has its upper end opened such that the cover (1) can be totally uncoupled from the guiding assemblies (G1, G2) when the cover (T1) is moved upwards with a translation movement.

3. Mechanism (M) according to any of the previous claims, wherein the first (R1, R1') and the second groove (R2, R2') are closed in their upper end.

4. Mechanism (M) according to claim 2 and claim 3, wherein the first groove (R1') is placed in the vicinity of the first axis (E1) and the second groove (R2') is placed in the vicinity of the second axis (E2), the first groove (R1') being extended at his lower end by a vertical groove (R3') which extends upwards, the second groove (R2') being extended at his lower end by a vertical groove (R4') which extends upwards, the vertical grooves being distinct grooves.

5. Mechanism (M) according to claims 2 and claim 3, wherein the first groove (R1) and the second groove (R2) are joined in their lower ends, such that they are extended therefrom by a common vertical groove (R3, R4).

6. Mechanism (M) according to claims 4 and 5, such that each assembly has two grooves (R1, R1') centred in the first axis (E1) and two grooves (R2, R2') centred in the second axis (E2), two grooves (R1, R2) extending through a common vertical groove (R3, R4), the other two grooves (R1', R2') extending through distinct vertical grooves (R3', R4').

7. Mechanism (M) according to any of the previous claims, wherein the first protrusion (W1, W2, U1, U2) comprises a wheel (W).

8. Mechanism (M) according to any of the previous claims, which comprises an embeddable structure (S) which defines the housing (H), the guiding assemblies (G1, G2) being fixed to the embeddable structure (S), the embeddable structure (S) being provided with the bearing surfaces (S1, S2).

9. Mechanism (M) according to claim 8, wherein the embeddable structure (S) comprises a frame (F).

10. Mechanism (M) according to claim 9, wherein the frame (F) is made in two separate parts (F1, F2), such that a discontinuous portion is defined, the opposite ends (11, 12) of the cover (1) fitting in the discontinuous portion.

11. Mechanism (M) according to claims 9 or 10, wherein two accessing apertures (A1, A2) are defined between the frame (F) and the cover (1), such that cables can access the connections within the housing (H) when the cover (1) is in a lowest position.

12. Mechanism according to any of claims 8 to 11, wherein the embeddable structure (S) comprises plates (H1, H2) adjacent the guiding assemblies (G1, G2) for the attachment thereof, the plates (H1, H2) comprising grooves (H1R, H2R) adjacent to some of the grooves (R1, R1', R2, R2') of the guiding assemblies.

13. Mechanism according to claim 12, wherein the grooves (H1R, H2R) of the plates (H1, H2) are wider than the grooves of the grooves (R1, R1', R2, R2') of the guiding assemblies (G1, G2).

14. Mechanism according to any of the previous claims, wherein the guiding assemblies (G1, G2) are made of plastic material.

15. Mechanism according to any of the preceding claims, wherein the guiding extensions (P1, P2) and the guiding assemblies (G1, G2) comprise means for stabilizing the position of the cover (1) in some positions.

## Patentansprüche

1. Mechanismus (M) zum Öffnen und Schließen einer Abdeckung (1) eines Gehäuses (H), welcher dazu eingerichtet ist, von zwei gegenüberliegenden Seiten (13,14) angehoben zu werden, um Zugang zu der einen (13) oder der anderen (14) Seite zu ermöglichen, sodass, wenn eine der Seiten (13,14) angehoben wird, die andere Seite (13,14) fixiert bleibt, sodass die Abdeckung (1) um eine erste (E1) oder zweite (E2) Achse schwenkt, welche jeweils von der anderen Seite (13,14) definiert wird, wobei der Mechanismus (M) umfasst:
- die Abdeckung (1), zwei endseitige Lageroberflächen (S1, S2) zweier gegenüberliegender Enden, welche in der Abdeckung (1) für das Abstützen an zwei an das Gehäuse (H) angrenzende Kanten (B1, B2) ausgebildet sind
- zwei Führungserweiterungen (P1, P2), welche von der Abdeckung (1) abragen und die den Lageroberflächen (S1, S2) angrenzend angeordnet und dazu eingerichtet sind, in die Richtung des Gehäuses (1) orientiert zu sein
- zwei Führungsanordnungen (G1,G2), welche in den den Kanten (B1,B2) angrenzenden Gehäuseoberflächen anordenbar sind, sodass die Führungsanordnungen (G1,G2) den Führungserweiterungen (P1,P2) gegenüberlegen, wenn die Abdeckung sich an die zwei Kanten (B1,B2) anlehnt,
**dadurch gekennzeichnet, dass**
jede Führungsanordnung (G1,G2) mindestens eine erste Rille (R1,R1') und eine zweite Rille (R2,R2') beinhaltet, welche beide eine Kreisbogenform haben, und jede Führungserweiterung (P1, P2) mindestens einen ersten Vorsprung (W1, W2, U1, U2) hat, welcher in den Rillen gleitet (R1, R1', R2, R2'), wobei
- das Zentrum der ersten Rille (R1, R1') sich auf der ersten Achse (E1) befindet
- das Zentrum der zweiten Rille (R2,R2') sich auf der zweiten Achse (E2) befindet.

2. Mechanismus (M) nach Anspruch 1,
wobei die ersten (R1, R1') und zweiten (R2, R2') Rillen an ihrem unteren Ende von einer vertikalen Rille erweitert (R3,R3',R4,R4') sind, welche sich nach oben erweitert und deren oberes Ende offen ist, sodass die Abdeckung (1) vollständig von den Führungsanordnungen (G1,G2) gelöst werden kann, wenn die Abdeckung (T1) mittels einer Translationsbewegung nach oben bewegt wird.

3. Mechanismus (M) nach einem der vorangehenden Ansprüche,
wobei die erste (R1,R1') und die zweite Rille (R2,R2') an ihrem oberen Ende geschlossen sind.

4. Mechanismus (M) nach Anspruch 2 und 3
wobei die erste Rille (R1') in der Nähe der ersten Achse (E1) und die zweite Rille (R2') in der Nähe der zweiten Achse angeordnet ist, und wobei die erste Rille (R1') an ihrem unterem Ende von einer vertikalen Rille (R3'), welche sich nach oben hin erstreckt, verlängert wird, und wobei die zweite Rille (R2') an ihrem unteren Ende von einer vertikalen Rille (R4') welche sich nach oben hin erstreckt, verlängert wird, und wobei die vertikalen Rillen als unterschiedliche Rillen ausgebildet sind.

5. Mechanismus (M) nach Anspruch 2 und 3,
wobei die erste Rille (R1) und die zweite Rille (R2) in ihren unteren Enden verbunden sind, sodass sie von dort aus als eine gemeinsame vertikale Rille (R3,R4) verlaufen.

6. Mechanismus (M) nach Anspruch 4 und 5,
wobei jede Vorrichtung zwei Rillen (R1,R1') hat, welche sich im Zentrum der ersten Achse (E1) befinden, und zwei Rillen (R2,R2'), welche sich im Zentrum der zweiten Achse (E2) befinden, wobei sich zwei Rillen (R1,R2) durch eine gemeinsame vertikale Rille (R3,R4) erstrecken und wobei die anderen beiden Rillen (R1', R2') sich durch unterschiedliche vertikale Rillen (R3',R4') erstrecken.

7. Mechanismus (M) nach einem der vorangehenden Ansprüche,
wobei der erste Vorsprung (W1,W2,U1,U2) ein Rad (W) umfasst.

8. Mechanismus (M) nach einem der vorangehenden Ansprüche,
welcher eine integrierbare Struktur (S) umfasst, welche das Gehäuse (H) definiert und wobei die Führungsvorrichtungen (G1,G2) an der integrierbaren Struktur (S) fixiert sind und wobei die integrierbare Struktur (S) mit den Lageroberflächen (S1,S2) versehen ist.

9. Mechanismus (M) nach Anspruch 8,
wobei die integrierbare Struktur (S) einen Rahmen (F) umfasst.

10. Mechanismus (M) nach Anspruch 9,
wobei der Rahmen (F) in zwei separate Teile (F1,F2) aufgeteilt ist, sodass ein Unterbrechungsabschnitt geschaffen ist und die gegenüberliegenden Enden (11,12) der Abdeckung (1) in den Unterbrechungsabschnitt passen.

11. Mechanismus (M) nach Anspruch 9 oder 10,
wobei zwei Zugangsöffnungen (A1, A2) zwischen dem Rahmen (F) und der Abdeckung (1) geschaffen sind, sodass Kabel an Verbindungen innerhalb des Gehäuses geführt werden können, wenn die Abdeckung (1) des Gehäuses (H) in der untersten Position ist.

12. Mechanismus nach einem der Ansprüche 8 bis 11,
wobei die integrierbare Struktur (S) Platten (H1, H2) zur Verbindung umfasst, welche an die Führungsvorrichtungen (G1,G2) angrenzen, und wobei die Platten (H1,H2) Rillen (H1R,H2R) umfassen, welche an einige der Rillen (R1,R1',R2,R2') der Führungsvorrichtungen angrenzen.

13. Mechanismus nach Anspruch 12,
wobei die Rillen (H1R,H2R) der Platten (H1,H2) weiter sind als die Rillen der Rillen (R1,R!',R2,R2') der Führungsvorrichtungen (G1,G2).

14. Mechanismus nach einem der vorangehenden Ansprüche,
Führungsvorrichtungen (G1,G2) aus Kunststoff hergestellt sind.

15. Mechanismus nach einem der vorangehenden Ansprüche,
wobei die Führungserweiterungen (P1,P2) und die Führungsvorrichtungen (G1,G2) Mittel zum Stabilisieren der Position der Abdeckung (1) in einigen Stellungen umfassen.

## Revendications

1. Mécanisme (M) pour ouvrir et fermer le couvercle (1) d'un boîtier (H), le couvercle (1) étant adapté pour être soulevé par deux côtés opposés (13, 14) pour permettre un accès à l'intérieur par l'un (13) ou l'autre côté (14), de sorte que lorsque l'un des côtés (13, 14) est soulevé l'autre côté (14, 13) reste fixe de sorte que le couvercle pivote sur l'un parmi un premier (E1) ou un deuxième (E2) axe défini par l'autre côté (14, 13) respectivement, le mécanisme comprenant :
- le couvercle (1), deux surfaces d'appui d'extrémité (S1, S2) de deux extrémités opposées (11, 12) étant définies dans le couvercle (1) pour s'appuyer sur deux bords (B1, B2) adjacents au boîtier (H) ;
- deux extensions de guidage (P1, P2) s'étendant depuis le couvercle (1) agencées adjacentes aux surfaces d'appui (S1, S2) et adaptées pour être orientées vers le boîtier (H) ;
- deux ensembles de guidage (G1, G2) pouvant être agencés dans les surfaces de boîtier qui sont adjacentes aux bords (B1, B2), de sorte que les ensembles de guidage (G1, G2) se trouvent au regard des extensions de guidage (P1, P2) lorsque le couvercle s'appuie sur les deux bords (B1, B2) ;
**caractérisé en ce que** chaque ensemble de guidage (G1, G2) comprend au moins une première rainure (R1, R1') et une deuxième rainure (R2, R2'), ayant toutes deux une forme d'arc circulaire, et chaque extension de guidage (P1, P2) comprend au moins une première protubérance (W1, W2, U1, U2) qui coulisse au sein des rainures (R1, R1', R2, R2'), dans lequel :
- le centre de l'arc de cercle de la première rainure (R1, R1') est situé sur le premier axe (E1) ;
- le centre de l'arc de cercle de la deuxième rainure (R2, R2') est situé sur le deuxième axe (E2).

2. Mécanisme (M) selon la revendication 1, dans lequel les première (R1, R1') et deuxième (R2, R2') rainures sont prolongées au niveau de leur extrémité inférieure par une rainure verticale (R3, R3', R4, R4') qui s'étend vers le haut et a son extrémité supérieure ouverte de sorte que le couvercle (1) peut être totalement désaccouplé des ensembles de guidage (G1, G2) lorsque le couvercle (T1) est déplacé vers le haut par un mouvement de translation.

3. Mécanisme (M) selon l'une quelconque des revendications précédentes, dans lequel la première (R1, R1') et la deuxième rainure (R2, R2') sont fermées dans leur extrémité supérieure.

4. Mécanisme (M) selon la revendication 2 et la revendication 3, dans lequel la première rainure (R1') est placée à proximité du premier axe (E1) et la deuxième rainure (R2') est placée à proximité du deuxième axe (E2), la première rainure (R1') étant prolongée au niveau de son extrémité inférieure par une rainure verticale (R3') qui s'étend vers le haut, la deuxième rainure (R2') étant prolongée au niveau de son extrémité inférieure par une rainure verticale (R4') qui s'étend vers le haut, les rainures verticales étant des rainures distinctes.

5. Mécanisme (M) selon la revendication 2 et la revendication 3, dans lequel la première rainure (R1) et la deuxième rainure (R2) sont jointes à leurs extrémités inférieures, de façon à être prolongées depuis ces dernières par une rainure verticale commune (R3, R4).

6. Mécanisme (M) selon les revendications 4 et 5, tel que chaque ensemble comporte deux rainures (R1, R1') centrées sur le premier axe (E1) et deux rainures (R2, R2') centrées sur le deuxième axe (E2), deux rainures (R1, R2) se prolongeant à travers une rainure verticale commune (R3, R4), les deux autres rainures (R1', R2') se prolongeant à travers des rainures verticales distinctes (R3', R4').

7. Mécanisme (M) selon l'une quelconque des revendications précédentes, dans lequel la première protubérance (W1, W2, U1, U2) comprend une roue (W).

8. Mécanisme (M) selon l'une quelconque des revendications précédentes, qui comprend une structure encastrable (S) qui définit le boîtier (H), les ensembles de guidage (G1, G2) étant fixés à la structure encastrable (S), la structure encastrable (S) étant pourvue des surfaces d'appui (S1, S2).

9. Mécanisme (M) selon la revendication 8, dans lequel la structure encastrable (S) comprend un cadre (F).

10. Mécanisme (M) selon la revendication 9, dans lequel le cadre (F) est réalisé en deux parties séparées (F1, F2), de sorte qu'une portion discontinue est définie, les extrémités opposées (11, 12) du couvercle (1) s'emboitant dans la portion discontinue.

11. Mécanisme (M) selon les revendications 9 ou 10, dans lequel deux ouvertures d'accès (A1, A2) sont définies entre le cadre (F) et le couvercle (1), de sorte que des câbles peuvent accéder aux connexions au sein du boîtier (H) lorsque le couvercle (1) est dans une position la plus basse.

12. Mécanisme selon l'une quelconque des revendications 8 à 11, dans lequel la structure encastrable (S) comprend des plaques (H1, H2) adjacentes aux ensembles de guidage (G1, G2) pour leur fixation à ceux-ci, les plaques (H1, H2) comprenant des rainures (H1R, H2R) adjacentes à certaines des rainures (R1, R1', R2, R2') des ensembles de guidage.

13. Mécanisme selon la revendication 12, dans lequel les rainures (H1R, H2R) des plaques (H1, H2) sont plus larges que les rainures parmi les rainures (R1, R1', R2, R2') des ensembles de guidage (G1, G2).

14. Mécanisme selon l'une quelconque des revendications précédentes, dans lequel les ensembles de guidage (G1, G2) sont réalisés en matière plastique.

15. Mécanisme selon l'une quelconque des revendications précédentes, dans lequel les extensions de guidage (P1, P2) et les ensembles de guidage (G1, G2) comprennent des moyens pour stabiliser la position du couvercle (1) dans certaines positions.
